# EUROPEAN PATENT APPLICATION

(11) **EP 4 832 307 A1**
(43) Date of publication of application: **28.10.2026**
(21) Application number: 24906987.3
(22) Date of filing: 12.11.2024
(51) Int. Cl.: H02J 50/12, H02J 50/90

(54) **POWER RECEPTION DEVICE**

(30) Priority: 22.12.2023 JP 2023216380
(71) Applicant: DENSO CORPORATION, Kariya-city, Aichi 448-8661 (JP)
(72) Inventor: TAKAHASHI Masaya, Kariya- city, Aichi 4488661 (JP); NAKAYASHIKI Yusei, Kariya- city, Aichi 4488661 (JP); YAMAGUCHI Nobuhisa, Kariya- city, Aichi 4488661 (JP)
(74) Representative: TBK
(86) International application number: PCT/JP2024/040139
(87) International publication number: WO 2025/134599

(57) **Abstract**

A power receiving device (100) configured to receive AC power in a wireless manner, comprising: a resonance circuit (110) configured to receive the AC power; a rectifier circuit (120); a load device (130); a power control circuit (140) including switches (Sw) configured to short-circuit between input terminals of the rectifier circuit, the power control circuit being configured to adjust supplied power (Pa); a power receiving sensor (160); and a control circuit (150). The control circuit includes a short-circuit mode and a power supply mode. Before a start of reception of the AC power detected by the power receiving sensor, the control circuit sets a power supply ratio (D), which is a ratio of a period of the power supply mode, to a value smaller than a minimum target ratio (Dm) that is a minimum value of a target ratio (Dt) corresponding to a resonance or coupling state capable of setting the supplied power to a predetermined target power (Pt). After the power receiving sensor detects the reception of the AC power, the control circuit increases the power supply ratio to a value not greater than the target ratio (Dt).

## Description

The present application claims the benefit of priority of Japanese Patent Application No. 2023-216380 filed on December 22, 2023, the disclosure of which is incorporated in its entirety herein by reference.

### Technical Field

This disclosure relates generally to a power receiving apparatus.

### Background Art

In a power receiving device of a wireless power transfer system, for example, as disclosed in first patent document listed below, switching devices are used in a rectifier circuit that rectifies AC power received by the power receiving device. In the following description, the switching devices are referred to as switches. In the first patent document, a resonance circuit that receives the AC power is connected to a load via the rectifier circuit. The technique taught in the first patent document controls, by controlling the rectifier circuit with the switches, a period during which DC power is supplied to the load and a period during which the AC power circulates between the resonance circuit and the rectifier circuit. In brief, the power receiving device in the first patent document works to control the DC power supplied to the load.

### [Prior Art Document]

### [Patent Document]

First Patent Document : Japanese Patent No. 6240503

### SUMMARY OF THE INVENTION

### SUMMARY OF THE INVENTION

The control of the DC power supplied to the load is performed, for example, in a case where the load is a battery, in order to prevent overcharging of the battery. More specifically, when the power received by the power receiving device is excessive, the control of the DC power supplied to the load is performed to suppress the received power, thereby delivering only the power required for charging the battery.

In the wireless power transfer system, the power received depends on a resonance state or a coupling state of resonance circuits related to the positional relationship between the power receiving device and the power transmitting device. The power receiving device, therefore, has difficulty predicting in advance the power to be received. For this reason, the power receiving device needs to confirm the received power before starting the control of the DC power supplied to the load. In a case where the load is the battery, the power receiving device located within a range of a power-transmittable distance from the power transmitting device starts receiving power on condition that a remaining capacity of the battery is insufficient. However, the confirmation of the received power delays the control of the DC power supplied to the load. This results in temporal excess of the DC power supplied to the load in the form of inrush power exceeding the power necessary for charging the battery. The inrush power may cause, for example, deterioration of the battery serving as the load and deterioration of EMC (Electromagnetic Compatibility). Therefore, in the power receiving device of the wireless power transfer system, a technique for preventing the inrush power has been required.

According to one aspect of this disclosure, there is provided a power receiving device configured to receive alternating power in a wireless manner using a magnetic field. The power receiving device comprises: (a) a resonance circuit including a power receiving coil configured to receive the alternating power, the resonance circuit having a magnitude of the alternating power that differs depending on a state of resonance of the resonance circuit or coupling of the power receiving coil; (b) a rectifier circuit that is configured to convert the alternating power into direct-current power; a load device that is configured to consume the direct-current power; (c) a power control circuit including a switch configured to short-circuit input terminals of the rectifier circuit, the power control circuit being configured to adjust, between the power receiving coil and the load device, supplied power that is at least a portion of the alternating power to be supplied to the load device; (d) a power receiving sensor that is configured to detect reception of the alternating power or the direct-current power; and (e) a control circuit configured to control an operation of the power receiving device. The control circuit is configured to execute a short-circuit mode and a power supply mode for each half cycle of a cycle of the alternating power. The short-circuit mode is a mode in which the input terminals are short-circuited for a predetermined short-circuit mode period. The power supply mode is a mode in which the input terminals are opened for a power supply mode period excluding the short-circuit mode period in the half cycle. Before start of reception of the alternating power detected by the power receiving sensor, the control circuit sets a power supply ratio, which is a ratio of the power supply mode period in the half cycle, to be smaller than a minimum target ratio. The minimum target ratio is a minimum value of a target ratio that is determined as a function of a state of the coupling capable of setting the supplied power to a predetermined target power. After detection of the reception of the alternating power by the power receiving sensor, the control circuit increases the power supply ratio to the target ratio or less.

In the power receiving device of the present disclosure, the received power varies depending on a resonance state of the resonance circuit or a magnetic coupling state of the power receiving coil. This causes the power supply ratio capable of setting the supplied power to the target power to vary depending on the resonance state or the coupling state. Further, in the power receiving device, consumption of DC power by the load device may start while the power receiving device is in a power receiving state. Therefore, by starting reception of power after setting the power supply ratio to a ratio smaller than the minimum target ratio, the power receiving device can prevent inrush power exceeding the target power even when consumption of DC power by the load device starts. Further, in the power receiving device, after consumption of DC power by the load device starts, the power supply ratio is increased, thereby enabling power to be efficiently supplied to the load device while suppressing inrush power.

### BRIEF DESCRIPTION OF THE DRAWINGS

The present disclosure will be understood more fully from the detailed description given hereinbelow and from the accompanying drawings of the preferred embodiments of the invention, which, however, should not be taken to limit the invention to the specific embodiments but are for the purpose of explanation and understanding only.

In the drawings:
Fig. 1 is an explanatory diagram illustrating a configuration of a wireless power transfer system according to the first embodiment;
Fig. 2 is an explanatory diagram illustrating a power supply mode;
Fig. 3 is an explanatory diagram illustrating a short-circuit mode;
Fig. 4 is an explanatory diagram illustrating a power supply mode;
Fig. 5 is an explanatory diagram illustrating a short-circuit mode;
Fig. 6 is an explanatory diagram illustrating received power;
Fig. 7 is an explanatory diagram illustrating supplied power at a start of power reception;
Fig. 8 is a flowchart illustrating processing of control performed by a control circuit;
Fig. 9 is a block diagram illustrating a configuration of a control system according to the second embodiment;
Fig. 10 is an explanatory diagram illustrating a power receiving device according to a fourth embodiment;
Fig. 11 is an explanatory diagram illustrating a filter circuit according to a modification;
Fig. 12 is an explanatory diagram illustrating a filter circuit according to a modification; and
Fig. 13 is an explanatory diagram illustrating received power according to a modification.

### MODE FOR CARRYING OUT THE INVENTION

### FIRST EMBODIMENT

### CONFIGURATION OF APPARATUS

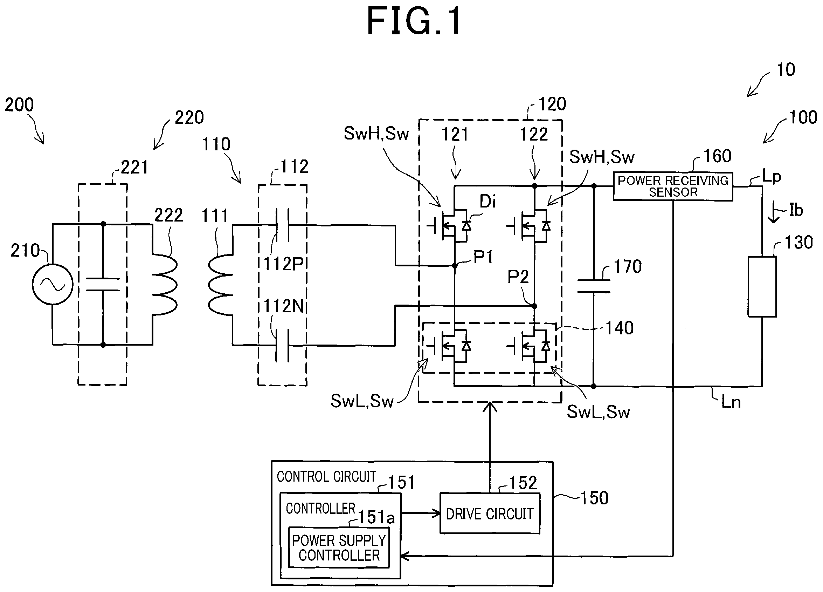

The wireless power transfer system 10 shown in Fig. 1 works to supply electric power to the load device 130 in a contactless manner by means of a magnetic field. As illustrated in Fig. 1, the wireless power transfer system 10 includes the power transmitting device 200 and the power receiving device 100. The wireless power transfer system 10 supplies electric power from the power transmitting device 200 to the power receiving device 100 without physical contact. For example, the wireless power transfer system 10 supplies electric power in a wireless manner to the power receiving device 100 mounted on a vehicle, such as an automobile.

The power transmitting device 200 supplies AC power to the power receiving device 100 in a wireless manner by means of a magnetic field. The power transmitting device 200 includes the AC power supply device 210 and the power transmitting resonance circuit 220.

The AC power supply device 210 supplies AC power having a predetermined operating frequency to the power transmitting resonance circuit 220. The AC power supply device 210 includes a power supply circuit and a power transmission circuit. The power supply circuit is, for example, an AC/DC converter circuit that converts AC power supplied from a commercial power source into DC power. The power transmission circuit is an inverter that converts the DC power supplied from the power supply circuit into AC power having the operating frequency. The operating frequency is set in accordance with a resonant frequency described later. In the present embodiment, the operating frequency of the AC power supply device 210 is, for example, 85 kHz, and is set using a predetermined power transmission frequency defined by radio regulations.

The power transmitting resonance circuit 220 is magnetically coupled with the power receiving coil 111 and resonates therewith. The power transmitting resonance circuit 220 includes the power transmitting coil 222 and the power transmitting resonant capacitor 221 connected in parallel with the power transmitting coil 222. In other words, the power transmitting resonance circuit 220 is a parallel resonance circuit.

The power transmitting resonant capacitor 221 functions to produce resonance in the power transmitting resonance circuit 220 with AC power having the operating frequency in a state in which the power transmitting coil 222 and the power receiving coil 111 are magnetically coupled. The capacitance of the power transmitting resonant capacitor 221 is set such that, in a state in which the power transmitting coil 222 and the power receiving coil 111 are magnetically coupled, the operating frequency substantially matches the resonant frequency of the power transmitting resonance circuit 220.

The power transmitting coil 222 generates a magnetic field as a function of the operating frequency of the AC power supply device 210. Further, the power transmitting coil 222 transmits AC power to the power receiving coil 111 by being magnetically coupled with the power receiving coil 111. In other words, the power transmitting coil 222 performs wireless power transmission utilizing an electromagnetic induction.

The power transmitting coil 222 is installed on the ground for use. More specifically, the power transmitting coil 222 is installed on the ground and oriented to face the power receiving coil 111 mounted on the vehicle. The positional relationship between the power transmitting coil 222 and the power receiving coil 111 will be described in detail later.

The power receiving device 100 receives AC power from the power transmitting device 200 in a wireless manner by means of a magnetic field. The power receiving device 100 includes the power receiving resonance circuit 110, the synchronous rectifier circuit 120, the load device 130, the power control circuit 140, the power receiving sensor 160, the control circuit 150, and the smoothing capacitor 170. The power receiving device 100 is mounted on the vehicle.

The power receiving resonance circuit 110 is magnetically coupled with the power transmitting coil 222 and undergoes resonance therewith. The power receiving resonance circuit 110 includes the power receiving coil 111 and the power receiving resonant capacitor 112 connected in series with the power receiving coil 111. That is, the power receiving resonance circuit 110 is a series resonance circuit.

The power receiving coil 111 is magnetically coupled with the power transmitting coil 222 by receiving the magnetic field generated by the power transmitting coil 222. The power receiving coil 111 is mounted on the vehicle and oriented to face the ground. The power receiving coil 111 receives the magnetic field generated by the power transmitting coil 222 when facing the power transmitting coil 222 installed on the ground. This enables the power receiving coil 111 to receive AC power in a wireless manner in the power receiving device 100. In the following discussion, the AC power received by the power receiving coil 111 will be referred to as received power Pr.

The power receiving resonant capacitor 112 causes the power receiving resonance circuit 110 to resonate with AC power having the operating frequency in a state in which the power transmitting coil 222 and the power receiving coil 111 are magnetically coupled. The capacitance of the power receiving resonant capacitor 112 is set such that, in a state in which the power transmitting coil 222 and the power receiving coil 111 are magnetically coupled, the operating frequency substantially matches the resonant frequency of the power receiving resonance circuit 110.

The received power Pr varies depending on a state in which the power receiving coil 111 and the power transmitting coil 222 are magnetically coupled and a resonance state of the power receiving resonance circuit 110. In other words, the received power Pr also varies depending on a relationship between the operating frequency and the resonant frequency. However, in order to facilitate understanding of the technology, the following discussion assumes a state in which the operating frequency matches the resonant frequency. A relationship between the state in which the power receiving coil 111 and the power transmitting coil 222 are magnetically coupled and the received power Pr will be described later.

The power receiving resonant capacitor 112 includes the first capacitor 112P on a positive side and the second capacitor 112N on a negative side of the power receiving resonance circuit 110. In other words, the resonant capacitors are disposed on both the positive and negative sides, thereby suppressing common-mode noise. In the following discussion, the power receiving resonance circuit 110 will also be simply referred to as a resonance circuit.

The synchronous rectifier circuit 120 converts the received AC power into DC power. The synchronous rectifier circuit 120 is implemented by a single-phase rectifier circuit that uses four MOSFETs (Metal-Oxide-Semiconductor Field-Effect Transistors) as rectifying devices. The synchronous rectifier circuit 120 includes two leg circuits, namely, the first leg circuit 121 and the second leg circuit 122. In the following discussion, the synchronous rectifier circuit 120 will also be simply referred to as the rectifier circuit 120.

Each of the first and second leg circuits 121 and 122 includes two switches Sw connected in series. Further, each of the leg circuits 121 and 122 connects the positive line Lp and the negative line Ln of DC power. Each of output terminals of the power receiving resonance circuit 110 is connected between the two switches Sw of a corresponding one of the leg circuits 121 and 122. In other words, a node between the two switches Sw of each of the leg circuits 121 and 122 corresponds to an input terminal in the synchronous rectifier circuit 120. Specifically, the synchronous rectifier circuit 120 has the input terminal P1 of the first leg circuit 121 and the input terminal P2 of the second leg circuit 122.

The switches Sw of each of the first and second leg circuits 121 and 122 are also referred to as the first switch SwH serving as a rectifying device leading to the positive line LP and the second switch SwL serving as a rectifying device leading to the negative line Ln. In other words, the switches Sw constitute all of the rectifying devices in the synchronous rectifier circuit 120.

Each of the switches Sw installed in each of the leg circuits 121 and 122 has the parallel diode Di connected in parallel thereto and oriented in a direction opposite to a forward direction of the switch Sw. The parallel diode Di is, for example, a body diode of a MOSFET. Each of the switches Sw has a diode disposed on the positive line Lp and a source disposed on the negative line Ln. A cathode of the parallel diode Di is connected to the drain. An anode of the parallel diode Di is connected to the source. Each of the switches Sw has a gate connected to the control circuit 150. Each of the switches Sw is actuated in response to a voltage inputted to the gate thereof from the control circuit 150 in the form of a control signal.

In this disclosure, the positive line Lp side is also referred to as a high side, and the negative line Ln side is also referred to as a low side. Accordingly, the first switch SwH is also referred to as a high-side switch SwH, and the second switch SwL is also referred to as a low-side switch SwL.

The synchronous rectifier circuit 120, therefore, workds to rectify AC power input from the power receiving resonance circuit 110 by means of the switches Sw. The DC power rectified by the synchronous rectifier circuit 120 is output to the load device 130 through the positive line Lp and the negative line Ln.

The power control circuit 140 is arranged between the power receiving coil 111 and the load device 130 and receives the AC power Pr (which will also be referred to below as received power Pr). The control circuit 140 works to regulate power Pa (which will also be referred to below as supply power Pa) to be supplied to the load device 130. The power control circuit 140 includes the switches Sw configured to short-circuit between the input terminals of the synchronous rectifier circuit 120. The switches Sw of the power control circuit 140 are also referred to as the low-side switches SwL of the synchronous rectifier circuit 120.

In the power control circuit 140, the low-side switches SwL of the synchronous rectifier circuit 120 are turned on to short-circuit between the input terminals P1 and P2 of the synchronous rectifier circuit 120. This causes the synchronous rectifier circuit 120 not to rectify the AC power. In the power control circuit 140, at least one of the two low-side switches SwL of the synchronous rectifier circuit 120 is turned off to open between the input terminals P1 and P2 of the synchronous rectifier circuit 120, thereby causing the synchronous rectifier circuit 120 to rectify the AC power, which is then outputted in the form of DC power. In this disclosure, a state in which the input terminals P1 and P2 of the synchronous rectifier circuit 120 are short-circuited by the power control circuit 140 is referred to as a short-circuit mode. A state in which the input terminals P1 and P2 of the synchronous rectifier circuit 120 are open by the power control circuit 140 is referred to as a power supply mode. Each mode will be described later in detail.

The smoothing capacitor 170 is connected to the outputs of the synchronous rectifier circuit in parallel to the load device 130. The smoothing capacitor 170 works to smooth a DC current and a DC voltage supplied to the load device 130.

The power receiving sensor 160 works to detect reception of power by the power receiving device 100 by monitoring the DC power. More specifically, the power receiving sensor 160 measures an electrical current which is produced by the reception of power by the power receiving device 100 and flows therethrough to the load device 130. Specifically, the power receiving sensor 160 is a current sensor that measures a current value of the DC power. The power receiving sensor 160 is connected in series between the output of the synchronous rectifier circuit 120 and the load device 130.

The load device 130 consumes DC power. The load device 130 is, for example, a device including a battery and a protection circuit for the battery. The load device 130 is charged by receiving the supply power Pa output from the synchronous rectifier circuit 120. The power charged in the load device 130 is used, for example, in the vehicle on which the power receiving device 100 is mounted.

The load device 130 starts consuming DC power based on a predetermined criterion related to power. In other words, the load device 130 is not always charged. For example, when the load device 130 includes a battery which starts to be charged when a remaining capacity thereof becomes less than a predetermined reference value in order to prevent overcharging of the battery. Thus, the load device 130 may not consume power when the power receiving device 100 is receiving the DC power. Additionally, the load device 130 may start consuming power when the power receiving device 100 is receiving the DC power. The consumption of DC power during the power reception will be described later in detail.

The power Pa supplied to the load device 130 is regulated by the power control circuit 140 using a target power Pt. For example, in a case where the load device 130 includes a battery, the target power Pt is determined based on a rated current of the battery. When an overcurrent flows through the battery, the battery generates excessive heat, thereby resulting in a reduction in service life of the battery. For this reason, the target power Pt is set to power that satisfies a current value equal to or less than the rated current. In addition, the protection circuit may cut off a current to be supplied to the battery when it is lower than the rated current of the battery.

The control circuit 150 works to control an operation of the power receiving device 100. The control circuit 150 includes the controller 151 and the drive circuit 152.

The drive circuit 152 works to actuate the switches Sw. More specifically, the drive circuit 152 outputs electric power required to drive each of the switches Sw in response to a command from the controller 151. The drive circuit 152 is connected to the respective gates of all the switches Sw of the synchronous rectifier circuit 120. The drive circuit 152 actuates the switches Sw by applying, to the gates of the switches Sw, a voltage required for an on or off operation of the switches Sw. For brevity, Fig. 1 omits the connection between the drive circuit 152 and the gates of the switches Sw.

The controller 151 works to generate a signal for controlling on-off operations of the switches Sw. The controller 151 is mainly constituted by, for example, a microcomputer and includes a CPU, a ROM, and a RAM (not shown). The controller 151 includes the power supply controller 151a in the form of a functional unit. A function of the power supply controller 151a will be described later. The controller 151 is connected to the power receiving sensor 160. The controller 151 executes a short-circuit mode or a power supply mode in response to a current value measured by the power receiving sensor 160.

### SHORT-CIRCUIT MODE AND POWER SUPPLY MODE

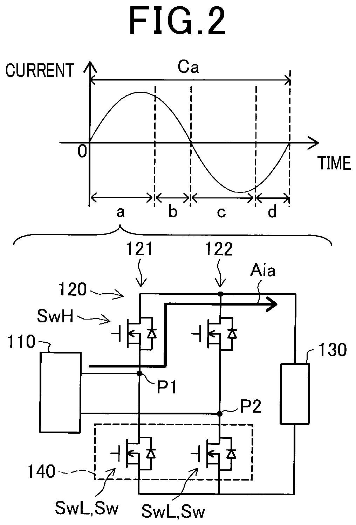

The control circuit 150 is operable in two control modes: the short-circuit mode and the power supply mode. The control circuit 150 executes the short-circuit mode in which the input terminals P1 and P2 of the synchronous rectifier circuit 120 are short-circuited during a predetermined short-circuit period in each half cycle of one cycle Ca of AC power. The control circuit 150 also executes the power supply mode in which the input terminals P1 and P2 are opened during a power supply period excluding the short-circuit period in the half cycle of the one cycle Ca. Operation of the power receiving device 100 in each of the short-circuit mode and the power supply mode in the one cycle Ca of AC power will be described with reference to Figs. 2 to 5. In Figs. 2 to 5, a waveform of AC current in the one cycle Ca is illustrated in an upper portion, and a circuit diagram of the power transmitting device 200 is illustrated in a lower portion. However, in order to facilitate understanding of the technology, illustration of some components, such as the power receiving resonance circuit 110, the smoothing capacitor 170, and the control circuit 150, is omitted.

In Fig. 2, a direction in which an AC current flows through the synchronous rectifier circuit 120 for a duration *a* of the power supply mode within a positive half cycle of AC power is illustrated by the arrow *Aia*. Specifically, for the duration *a*, the control circuit 150 controls, of the two switches Sw of the power control circuit 140, at least the low-side switch SwL of the first leg circuit 121 to be in an off state. This causes the AC current to flow to the load device 130 through the high-side switch SwH of the first leg circuit 121, so that the received power Pr is delivered to the load device 130.

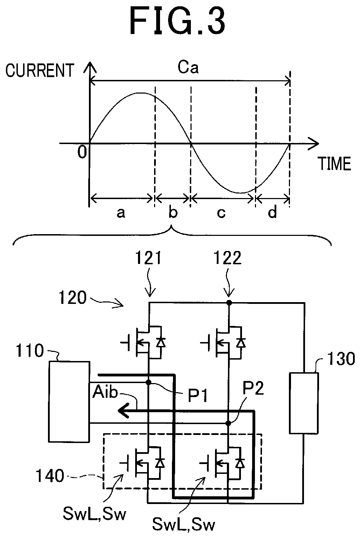

In Fig. 3, a direction in which an AC current flows through the synchronous rectifier circuit 120 for a duration *b* of the short-circuit mode within a positive half cycle of AC power is illustrated by the arrow *Aib*. Specifically, for the duration *b*, the control circuit 150 controls, of the two switches Sw of the power control circuit 140, at least the low-side switch SwL of the first leg circuit 121 to be in an on state. This causes the input terminals P1 and P2 of the synchronous rectifier circuit 120 to be short-circuited, so that no AC current flows to the load device 130. Accordingly, the received power Pr is not supplied to the load device 130.

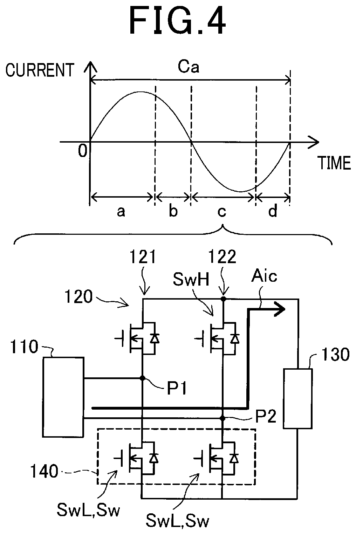

In Fig. 4, a direction in which an AC current flows through the synchronous rectifier circuit 120 for a duration *c* of the power supply mode in a negative half cycle of AC power is illustrated by the arrow *Aic*. Specifically, for the duration *c*, the control circuit 150 controls, of the two switches Sw of the power control circuit 140, at least the low-side switch SwL of the second leg circuit 122 to be in an off state. This causes the AC current to flow to the load device 130 through the high-side switch SwH of the second leg circuit 122, so that the received power Pr is delivered to the load device 130.

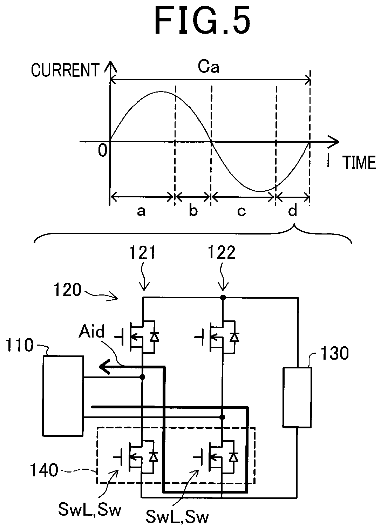

In Fig. 5, a direction in which an AC current flows through the synchronous rectifier circuit 120 for a duration *d* of the short-circuit mode in a negative half cycle of AC power is illustrated by the arrow *Aid*. Specifically, for the duration *d*, the control circuit 150 controls, of the two switches Sw of the power control circuit 140, at least the low-side switch SwL of the second leg circuit 122 to be in an on state. This causes the input terminals P1 and P2 of the synchronous rectifier circuit 120 to be short-circuited, so that no AC current flows to the load device 130. Accordingly, the received power Pr is not supplied to the load device 130.

In this disclosure, each of the durations *b* and *d* will also be referred to below as a short-circuit mode period. Similarly, each of the durations *a* and *c* will also be referred to below as a power supply mode period. The control circuit 150 executes the short-circuit mode for the short-circuit period and also executes the power supply mode for the power supply period, in each half cycle within one cycle Ca of alternating current power. The control circuit 150 works to selectively execute the short-circuit mode and the power supply mode to adjust the supply power Pa, which is to be supplied to the load device 130, to the predetermined target power Pt.

### POWER SUPPLY REGULATION METHOD

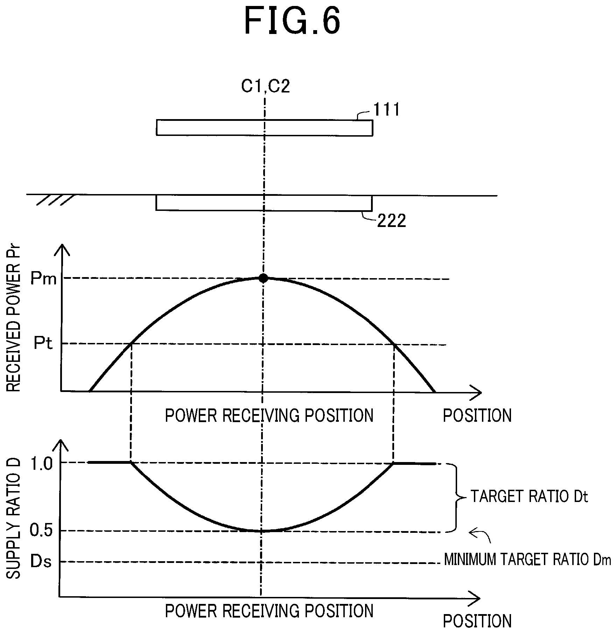

The upper part of Fig. 6 illustrates the power receiving coil 111 and the power transmitting coil 222 which are opposed to each other (which will also be referred to below as an opposed state). Specifically, Fig. 6 demonstrates a state in which the power receiving coil 111, which is positioned apart from the ground by being mounted on the vehicle, and the power transmitting coil 222, which is laid on the ground, are viewed from sides thereof.

The received power Pr varies depending on a state of magnetic coupling between the power receiving coil 111 and the power transmitting coil 222. More specifically, the received power Pr depends on a relative position of the power receiving coil 111 with respect to the power transmitting coil 222. The middle of Fig. 6 illustrates a relationship between the relative position of the power receiving coil 111 with respect to the power transmitting coil 222 and a magnitude of the received power Pr, which is illustrated by a solid line. In this embodiment, the above-described opposed state refers to a state in which the central axis CL1 of the power receiving coil 111 coincides with the central axis CL2 of the power transmitting coil 222. As illustrated in Fig. 6, when the power receiving coil 111 and the power transmitting coil 222 are in the opposed state, the received power Pr becomes maximum. The maximum value of the received power Pr is referred to as a maximum power Pm. The received power Pr decreases as the state deviates from the opposed state.

The supply power Pa is regulated by the power control circuit 140. More specifically, the supply power Pa is adjusted by executing the power supply mode or the short-circuit mode by the power control circuit 140 in response to a command from the control circuit 150. The control circuit 150 works to control the supply power Pa by changing a ratio of the power supply mode period within a half cycle of alternating current power. The ratio of the power supply mode period within the half cycle is referred to as a power supply ratio D or a duty cycle D.

The lower part of Fig. 6 illustrates a relationship between the relative position of the power receiving coil 111 with respect to the power transmitting coil 222 and a power supply ratio D which sets the supply power Pa to the target power Pt. At an arbitrary power receiving position, a ratio for matching the supply power Pa to the target power Pt is referred to as a target ratio Dt. A solid line in the lower part of Fig. 6 indicates the target ratio Dt.

In order to match the supply power Pa to the target power Pt, it is necessary to minimize the power supply ratio D when the received power Pr is the maximum power Pm. The power supply ratio D at this time will be referred to as a minimum target ratio Dm. In other words, the minimum target ratio Dm is determined as a function of the maximum power Pm and the target power Pt. However, in order to facilitate adjustment of the supply power Pa, the target power Pt is preferably 80% or less of the maximum power Pm. In the lower part of Fig. 6, the minimum target ratio Dm is illustrated as 0.5 by way of example.

Furthermore, in order to match the supply power Pa to the target power Pt, it is necessary to increase the power supply ratio D as the received power Pr deviates from the maximum power Pm. However, depending on the relative position of the power receiving coil 111 with respect to the power transmitting coil 222, the received power Pr may fall below the target power Pt. In this case, the control circuit 150 works to set the power supply ratio D to a maximum value. In other words, the control circuit 150 does not execute the short-circuit mode. Accordingly, as indicated by the solid line in the lower part of Fig. 6, the target ratio Dt becomes the maximum power supply ratio D at a position of the power receiving coil 111 where the received power Pr is lower than the target power Pt.

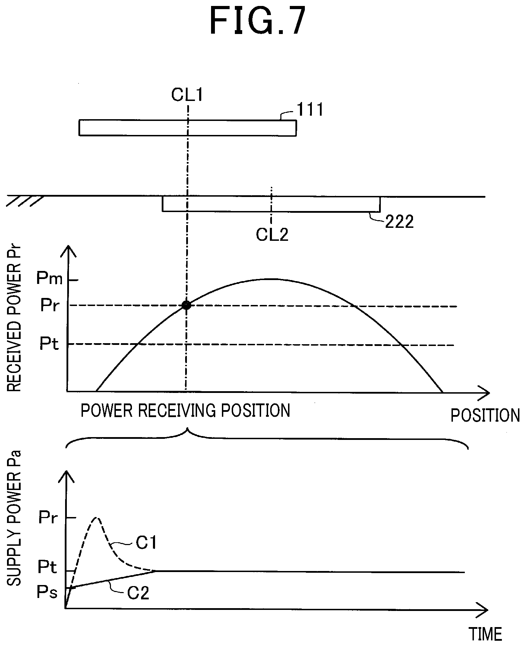

The upper part of Fig. 7 illustrates a state in which the central axis CL1 and the central axis CL2 are not coincident with each other while the power receiving coil 111 and the power transmitting coil 222 face each other. The middle part of Fig. 7 illustrates the received power Pr when the power receiving coil 111 and the power transmitting coil 222 are in the positional relation shown in the upper part of Fig. 7. The lower part of Fig. 7 illustrates a change in the supply power Pa from the start of reception of power by the power receiving coil 111 until a steady state of the supply power Pa is reached. As described above, the load device 130 may start consuming direct current power in a condition where the power receiving coil 111 is receiving the power. In this case, after detecting the received power Pr using the power receiving sensor 160, the control circuit 150 starts adjustment of the supply power Pa by the power control circuit 140. In other words, the supply power Pa is adjusted to match the target power Pt with a delay from the start of power reception. Accordingly, as indicated by the curve C1 in the lower part of Fig. 7, when control by the control circuit 150 described later is not performed, the supply power Pa exceeds the target power Pt and reaches the received power Pr immediately after the start of the power reception. In this disclosure, as indicated by the curve C1, a phenomenon in which the supply power Pa exceeds the target power Pt immediately after the start of the power reception is referred to as inrush power or power overshoot.

The curve C2 in the lower part of Fig. 7 indicates a transition of the supply power Pa when inrush power is suppressed by the control circuit 150. Hereinafter, control performed by the control circuit 150 will be described.

### CONTROL OPERATION OF POWER RECEIVING DEVICE

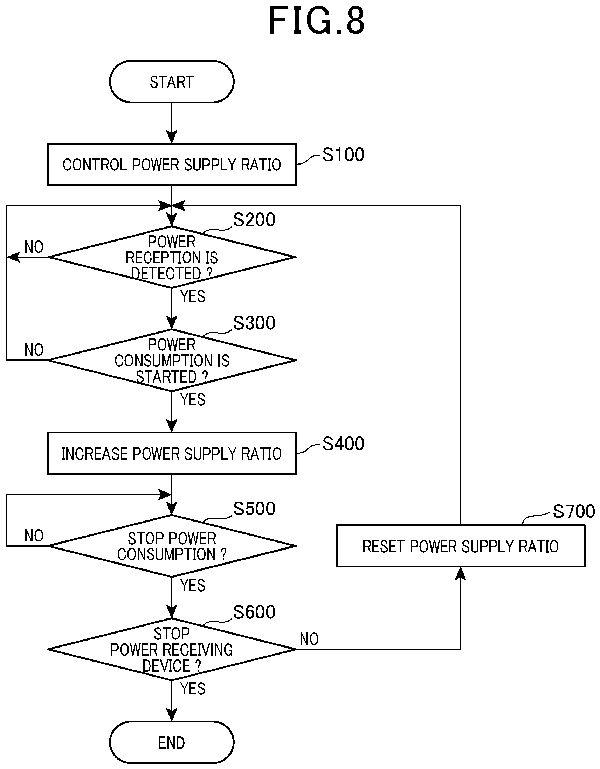

A control task executed by the control circuit 150 will be described below with reference to Fig. 8. Upon actuation of the power receiving device 100, in other words, when the control circuit 150 receives electrical power from a vehicle in which the power receiving device 100 is installed, the control circuit 150 initiates the program shown in Fig. 8 and enters in step S100.

In step S100, the control circuit 150 adjusts the power supply ratio D by means of the power receiving sensor 160 before start of reception of alternating-current power. More specifically, the control circuit 150 sets the power supply ratio D to a ratio Ds smaller than the minimum target ratio Dm, which is a minimum value of the target ratio Dt determined as a function of a magnetic coupling state of the power receiving coil 111 and the power transmitting coil 222 which is capable of matching the supply power Pa to the predetermined target power Pt. As described above, the minimum target ratio Dm is determined based on the maximum power Pm and the target power Pt. For example, as shown in the lower part of Fig. 6, the control circuit 150 sets the power supply ratio D to the ratio Ds smaller than 0.5 that is the minimum target ratio Dm.

The above operation causes, when the supply power Pa has started to be produced, as shown in the lower portion of Fig. 7, the supply power Pa to become the power Ps lower than the target power Pt due to the power supply ratio D having the ratio Ds smaller than the minimum target ratio Dm. Accordingly, even when the load device 130 starts consuming DC power in a power receiving mode of the power receiving device 100, the power receiving device 100 operates such that the supply power Pa does not exceed the target power Pt. In other words, the power receiving device 100 experiences no inrush power.

After step S100, the routine proceeds to step S200 wherein the control circuit 150 determines whether reception of power by the power receiving device 100 has started using the power receiving sensor 160. If a YES answer is obtained, meaning that the control circuit 150 has started to receive the power, then the routine proceeds to step S300. Alternatively, if a NO answer is obtained, then the routine repeats the operation in step S200.

In step S300, the control circuit 150 determines whether *dc* power has started to be consumed by the load device 130. Specifically, the control circuit 150 analyzes a value of current measured by the power receiving sensor 160 to determine whether the load device 130 started to consume *dc* power. If a YES answer is obtained, meaning that the load device 130 has started to consume *dc* power, then the routine proceeds to step S400. Alternatively, if a NO answer is obtained, then the routine returns back to step S200.

In step S400, the control circuit 150 increases the power supply ratio D to the target ratio Dt after start of consumption of DC power, as detected by the power receiving sensor 160. Specifically, the control circuit 150 increases the supply power Pa to the target power Pt by increasing the power supply ratio D having the ratio Ds smaller than the minimum target ratio Dm toward the target ratio Dt. This enables the power receiving device 100 to supply, to the load device 130, the supply power Pa satisfying the target power Pt while preventing inrush power.

It should be noted that the controller 151 has a functional unit that performs the operation in step S100 and works as the power supply controller 151a. The power supply controller 151a determines the power supply ratio D as a function of a current value of direct-current power. More specifically, the power supply controller 151a determines the power supply ratio D by PI control as a function of a difference between the current value Ib flowing through the load device 130 and the current value It that is a function of the target power Pt. The current value Ib flowing through the load device 130 is a current value measured by the power receiving sensor 160. The current value It is determined by the controller 151 as a function of the predetermined target power Pt.

After step S400, the routine proceeds to step S500 wherein the control circuit 150 determines whether consumption of direct-current power by the load device 130 has stopped. For example, the control circuit 150 determines whether consumption of direct-current power by the load device 130 has stopped using the current value measured by the power receiving sensor 160. If a NO answer is obtained, meaning that direct-current power is determined as being consumed by the load device 130, the control circuit 150 repeats the operation in step S500. Alternatively, if a Yes answer is obtained, meaning that direct-current power is not consumed by the load device 130, then the routine proceeds to step S600.

In step S600, the control circuit 150 determines whether the power receiving device 100 has been stopped. Specifically, the control circuit 150 receives an off-command, for example, from a controller of the vehicle in which the power receiving device 100 is mounted to deactivate the power receiving device 100. If a NO answer is obtained, meaning that the control circuit 150 does not receive the off-command to turn off the power receiving device 100, then the routine proceeds to step S700. If a YES answer is obtained, meaning that the control circuit 150 has received the off-command, the routine then terminates.

In step S700, the control circuit 150 returns the power supply ratio D to the ratio Ds set in step S100. In other words, the control circuit 150 sets the power supply ratio D to the ratio Ds that is smaller than the minimum value (i.e., the minimum target ratio Dm) of the target ratio Dt determined as a function of the state of coupling of the power receiving coil 111 and the power transmitting coil 222 which enables the supply power Pa to match the predetermined target power Pt. After step S700, the routine returns back to step S200.

In the above-described structure of the power receiving device 100, the received power varies depending on a state of resonance of the resonance circuit 220 or a state of magnetic coupling between the power receiving coil 111 and the power transmitting coil 222, thereby causing the power supply ratio D that enables the supply power Pa to be made equal to the target power Pt to also vary depending on the state of the resonance or the state of the coupling. Further, consumption of direct-current power by the load device 130 may be started when the power receiving device 100 is receiving power. Accordingly, the power receiving device 100 is designed to start to receive the power after setting the power supply ratio D to be smaller than the minimum target ratio Dm, thereby preventing inrush power from exceeding the target power Pt even when consumption of direct-current power by the load device 130 is started. Further, the power receiving 100 also works to increase the power supply radio D after the consumption of direct-current power is started, which ensures the stability in delivering the power to the load device 130 while suppressing inrush power.

The above-described structure of the power receiving device 100 has the rectifier circuit 120 function as the power control circuit 140. Specifically, it is unnecessary for the power receiving device 100 to include the power control circuit 140 and the rectifier circuit 120 that are physically discrete from each other. The power receiving device 100 in this embodiment is designed to have a single unit functioning as the power control circuit 140 and the rectifier circuit 120, which results in a decrease in the size or production cost of the power receiving device 100. The structure including the power control circuit 140 and the rectifier circuit 120 that are discrete from each other will be described below in detail.

### SECOND EMBODIMENT

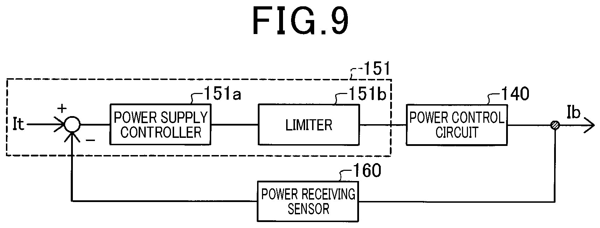

The control circuit 150 also include the limiter 151b. The limiter 151b limits the power supply ratio D determined by the power supply controller 151a. Further, the limiter 151b increases, i.e., relaxes the limit at a speed slower than that at which the power supply controller 151a determines the power supply ratio D. The limiter 151b is, as clearly illustrated in Fig. 9, disposed between the power supply controller 151a and the power control circuit 140 in the control system of the power receiving device 100.

The power supply controller 151a, as already described, determines the power supply ratio D by PI control as a function of a difference between the current value Ib flowing through the load device 130 and the current value It that is a function of the target power Pt. The limiter 151b receives a command for controlling the power control circuit 140 through the power supply controller 151a. Specifically, the command for controlling the power control circuit 140 by the power supply controller 151a is a command that determines the power supply ratio D. This causes the power control circuit 140 to control the off-times of the switches Sw. A control speed of the limiter 151b is measured by comparing changes in signals output from the power supply controller 151a and the limiter 151b using an oscilloscope.

The above-described structure works to limit, by the limiter 151b, the power supply ratio D depending upon fluctuating power and relaxes the limitation by the limiter 151b at a speed slower than a speed at which the power supply ratio D is determined. For example, when received power fluctuates due to a disturbance, the power receiving device 100 suppresses a variation in the power supply ratio D resulting from the fluctuation of the received power. This enables the power receiving device 100 to stably perform control for suppressing inrush power.

### THIRD EMBODIMENT

The control circuit 150 in the third embodiment is designed to execute the short-circuit mode and the power supply mode in the following manners. The control circuit 150 analyzes an output from the power receiving sensor 160 to selectively execute the short-circuit mode and the power supply mode using the low-side switches SwL and the parallel diodes Di connected in parallel with the high-side switches SwH during a first time period including a start of power reception. Specifically, for the first time period including the start of power reception, the control circuit 150 turns off the high-side switches SwH, thereby rectifying the received power Pr by the parallel diodes Di.

Further, when the power receiving sensor 160 detects a predetermined reference current during a second time period after the first time period, the control circuit 150 selectively executes the short-circuit mode and the power supply mode using the low-side switches SwL and the high-side switches SwH. Specifically, for rectification of AC power, the control circuit 150 starts on/off operations of the high-side switches SwH. The reference current is, for example, 20% of a current value measured by the power receiving sensor 160 at the target power Pt.

The above-described operation of the power receiving device 100 serves to rectify AC power using the first switches SwH connecting with the positive line Lp when an electrical current higher than the predetermined reference current flows through the power receiving device 100. For example, when each of the switches Sw is made of a MOSFET and a current flowing between a drain and a source of the MOSFET is small, it may cause a voltage appearing between the drain and the source to be distorted. In this case, when an on/off operation of the MOSFET is executed in response to a voltage between the drain and the source, instability of control of the on/off operation may result due to distortion of the voltage between the drain and the source. The power receiving device 100 according to this embodiment performs rectification using the parallel diodes Di of the first switches SwH at a start of power reception when a current supplied to the power receiving device 100 is small, thereby enabling more stable rectification as compared with a configuration in which rectification is performed by the first switches SwH.

### FOURTH EMBODIMENT

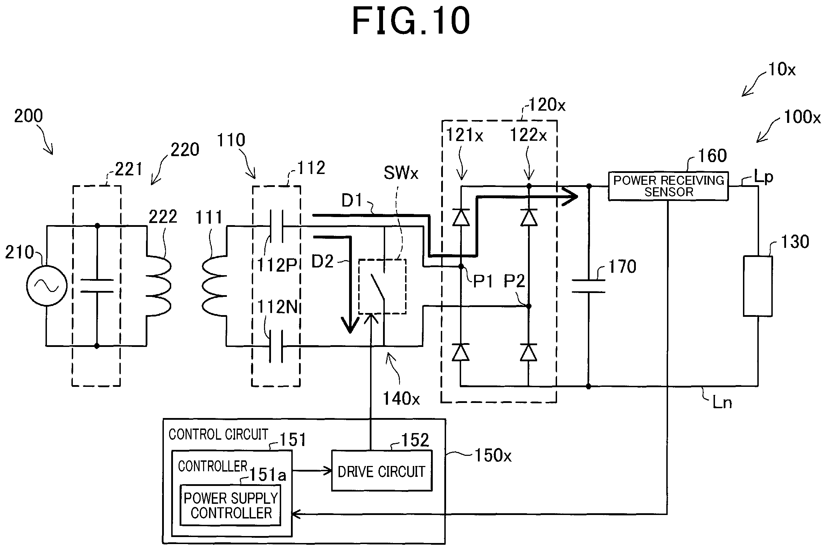

In the first embodiment, the power control circuit 140 includes the switches Sw of the synchronous rectifier circuit 120. However, the power control circuit 140 in this embodiment is configured separately from the synchronous rectifier circuit 120. Fig. 10 shows the power receiving device 10x in the fourth embodiment which includes the power control circuit 140x including the switch Swx that short-circuits between the input terminals P1 and P2 of the rectifier circuit 120x. The power control circuit 140x is illustrated separately from the rectifier circuit 120x. More specifically, the switch Swx of the power control circuit 140x is connected in parallel with the power receiving resonance circuit 110 and the rectifier circuit 120x and arranged between the power receiving resonance circuit 110 and the rectifier circuit 120x. The switch Swx is made of a semiconductor relay. Constituent elements different from those of the first embodiment are denoted by appending "x" to reference numerals used in the first embodiment.

The power control circuit 140x is configured separately from the rectifier circuit 120x. The rectifier circuit 120x is, as clearly illustrated in Fig. 10, made only by rectifier diodes. The drive circuit 152 of the control circuit 150 works to control only the power control circuit 140x. When the power control circuit 140x executes the power supply mode, a positive current of AC power, as indicated by an arrow D1 in Fig. 10, flows to the load device 130 through the rectifier diode of the rectifier circuit 120x which connects with the positive line Lp. When the short-circuit mode is executed by the power control circuit 140x, the positive current of AC power does not flow to the rectifier circuit 120x, but returns to the power receiving resonance circuit 110 through the switch Swx of the power control circuit 140x, as indicated by an arrow D2 in Fig. 10. A negative current of AC power similarly flows in the power supply mode and the short-circuit mode.

The above-described structure of the power receiving device 100x in this embodiment therefore facilitates adjustment of the power supply power Pa as compared with a case where the power control circuit 140 is constituted by the switches Sw installed in the rectifier circuit 120.

### FIRST MODIFICATION

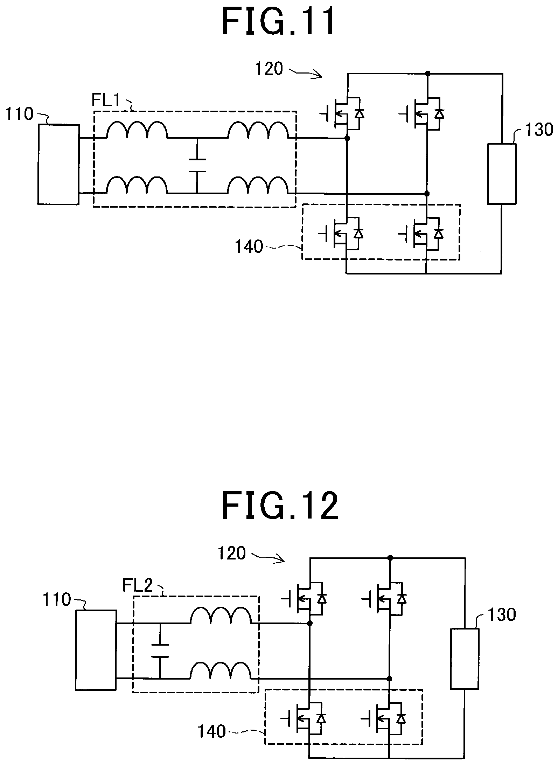

The power receiving device 100 may include a filter circuit between the power receiving resonance circuit 110 and the power control circuit 140. More specifically, the power receiving device 100 may include an immittance filter such as the filter circuit FL1 shown in Fig. 11 or the filter circuit FL2 shown in Fig. 12. The power receiving device 100 may further include a band-pass filter in addition to the immittance filter. Although Fig. 11 and Fig. 12 illustrate the power receiving device 100 according to the first embodiment as an example, the power receiving device 100x according to the fourth embodiment may include the filter circuit FL1 or the filter circuit FL2.

The above-described structure of the power receiving device 100 realizes a constant-current characteristic of AC power and a harmonic suppression function.

### SECOND MODIFICATION

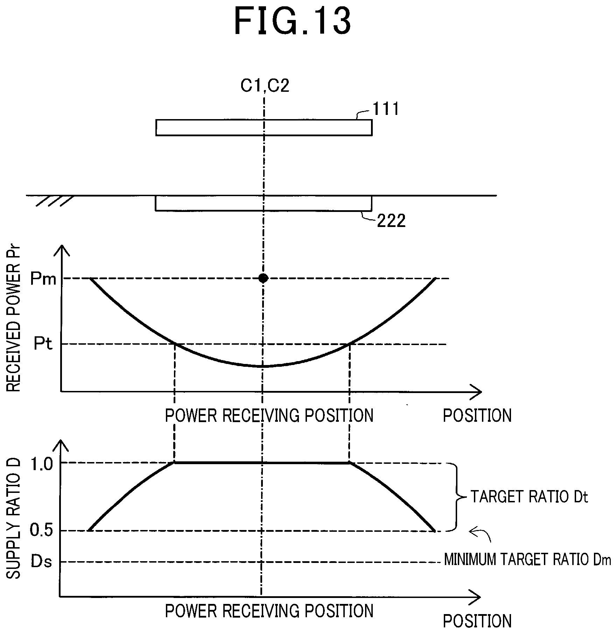

In the above embodiments, the received power Pr becomes greatest when the power transmitting coil 222 and the power receiving coil 111 face each other with their center axes coinciding. The received power Pr usually decreases as the power receiving coil 111 moves relative to the power transmitting coil 222 away from a state in which the center axes coincide. However, depending on a resonance scheme of the power transmitting resonance circuit 220 and the power receiving resonance circuit 110, the received power Pr may increase, as shown in Fig. 13, as the power receiving coil 111 moves relative to the power transmitting coil 222 away from the state in which the center axes thereof coincide. Specifically, such a phenomenon arises from a configuration in which the power transmitting resonance circuit 220 includes the power transmitting coil 222 and the power transmitting resonant capacitor 221 connected in series, and the power receiving resonance circuit 110 includes the power receiving coil 111 and the power receiving resonant capacitor 112 connected in series. In other words, the power transmitting resonance circuit 220 is made in the form of a series resonance circuit, and the power receiving resonance circuit 110 is made in the form of a series resonance circuit. In this case, the received power Pr becomes smallest when the power transmitting coil 222 and the power receiving coil 111 face each other with the center axes thereof coinciding, while the received power Pr increases as the power receiving coil 111 moves relative to the power transmitting coil 222 away from a state in which the center axes coincide. Accordingly, the minimum target ratio Dm becomes the target ratio Dt at a position where a relative position between the power transmitting coil 222 and the power receiving coil 111 is farthest in a state in which the power transmitting coil 222 and the power receiving coil 111 face each other with the center axes thereof coinciding. Also in the case of Fig. 13, by controlling the power receiving device 100 in the same manner as in the above embodiments, the power receiving device 100 is capable of efficiently supplying power to the load device 130 while suppressing inrush power.

### THIRD MODIFICATIONS

(1) In the above embodiments, the power receiving device 100 is mounted on a vehicle. However, the power receiving device 100 may be mounted on another moving body. For example, the power receiving device 100 may be mounted on an aircraft.
(2) In the above embodiments, the power transmission circuit may further include a rectifier circuit, a filter circuit, and the like.
(3) In the above embodiments, the switches Sw constitutes all of the rectifying devices constituting the synchronous rectifier circuit 120. However, the switches Sw need only constitute at least a part of the rectifying devices constituting the synchronous rectifier circuit 120. For example, one of the switch Sw may constitute only the rectifying device connecting with the negative line Ln. In this case, the rectifying device connecting with the positive line Lp is constituted by a rectifier diode.
(4) In the first embodiment, the power receiving sensor 160 is a current sensor that measures a current value of direct-current power. However, the power receiving sensor 160 may be another type of sensor. For example, the power receiving sensor 160 may be a voltage sensor that measures a voltage of the direct-current power. Further, the power receiving sensor 160 may be constituted by a plurality of sensors. For example, the power receiving sensor 160 may be constituted by a first sensor that detects power reception based on alternating-current power and a second sensor that detects power consumption of the load device 130 based on direct-current power.
(5) In the above embodiments, a battery is exemplified as the load device 130. However, the load device 130 is not limited to a battery. For example, the load device 130 may be a lighting device or a power device. In a case where the load device 130 is a lighting device or a power device, the load device 130 starts consuming the direct-current power in response to activation of the device.
(6) In the above embodiments, the target power Pt is predetermined according to specifications of the load device 130. However, the target power Pt is not limited to the specifications of the load device 130 and may be predetermined in other manners. For example, the target power Pt may be determined as a function of a rated power of the power receiving device 100 as a circuit, a power demand of a grid power supply that supplies electric power to the power transmitting device 200.
(7) In the above embodiments, 0.5 is exemplified as the minimum target ratio Dm. However, the minimum target ratio Dm is not limited to 0.5. The minimum target ratio Dm may be 0.2, 0.7, or the like.
(8) In the above embodiments, the control circuit 150 selectively determines start and stop of consumption of DC power by the load device 130 based on a current value measured by the power receiving sensor 160. However, the control circuit 150 may determine the start and the stop of the consumption of the DC power by the load device 130 by another method. For example, the control circuit 150 may be connected to a control device of the load device 130 and may determine the start and the stop of the consumption of the DC power by the load device 130 based on a command received from the control device of the load device 130.
(9) In the above embodiments, the reference current is exemplified as a current value corresponding to 20% of a current value at the target power Pt. However, the reference current may be a current value corresponding to 10% or 40% of the current value at the target power Pt, or may be a reference value based on another current.
(10) In the above embodiments, the controller 151 is mainly constituted by, for example, a microcomputer. In other words, the controller 151 is constituted as a digital circuit. However, the controller 151 may be constituted by an analog circuit.
(11) In the above embodiments, the power supply controller 151a determines the power supply ratio D based on a current value. However, as described above, when the power receiving sensor 160 is a voltage sensor, the power supply controller 151a may determine the power supply ratio D based on a voltage value.
(12) In the above embodiments, the control circuit 150 performs control to increase the power supply ratio D to the target ratio Dt after start of the consumption of the DC power, based on the power receiving sensor 160. However, the control circuit 150 does not necessarily increase the power supply ratio D to match the target ratio Dt. More specifically, the control circuit 150 may increase the power supply ratio D within a range from the ratio Ds to the target ratio Dt.
(13) In the above embodiments, each of the switches Sw of the synchronous rectifier circuit 120 is made of a MOSFET. However, each of the switches Sw of the synchronous rectifier circuit 120 may be another switching device. For example, each switch Sw may be a BJT (Bipolar Junction Transistor) or an IGBT (Insulated Gate Bipolar Transistor).
(14) In the above embodiments, the periods *b* and *d* are defined as durations of the short-circuit mode, and the periods *a* and *c* are defined as durations of the power supply mode. However, the periods *b* and *d* may be durations of the power supply mode, and the periods *a* and *c* may be durations of the short-circuit mode.

The present disclosure is not limited to the above-described embodiments and modifications, and may be implemented in various configurations without departing from the spirit thereof. For example, the technical features in the embodiments and the modifications corresponding to the technical features in the respective aspects described in the Summary of the Invention may be appropriately replaced or combined in order to solve a part or all of the above-described problems or to achieve a part or all of the above-described effects. Further, when the technical features are not described in the present specification as being essential, the technical features may be deleted as appropriate.

This disclosure offers the following aspects.

### FIRST ASPECT

A power receiving device (100, 100x) configured to receive alternating power in a wireless manner using a magnetic field, the power receiving device comprising:
a resonance circuit (110) including a power receiving coil (111) configured to receive the alternating power, the resonance circuit having a magnitude of the alternating power that differs depending on a state of resonance of the resonance circuit or coupling of the power receiving coil;
a rectifier circuit (120, 120x) that is configured to convert the alternating power into direct-current power;
a load device (130) that is configured to consume the direct-current power;
a power control circuit (140, 140x) including a switch (Sw) configured to short-circuit input terminals (P1, P2) of the rectifier circuit, the power control circuit being configured to adjust, between the power receiving coil and the load device, supplied power (Pa) that is a portion of the alternating power to be supplied to the load device;
a power receiving sensor (160) that is configured to detect reception of the alternating power or the direct-current power; and
a control circuit (150, 150x) configured to control an operation of the power receiving device, wherein
the control circuit is configured to execute a short-circuit mode and a power supply mode for each half cycle of a cycle (Ca) of the alternating power, the short-circuit mode being a mode in which the input terminals are short-circuited for a predetermined short-circuit mode period, the power supply mode being a mode in which the input terminals are opened for a power supply mode period excluding the short-circuit mode period in the half cycle,
the control circuit, before start of reception of the alternating power detected by the power receiving sensor, works to set a power supply ratio (D), which is a ratio of the power supply mode period in the half cycle, to be smaller than a minimum target ratio (Dm), the minimum target ratio (Dm) being a minimum value of a target ratio (Dt) that is determined as a function of a state of the coupling capable of setting the supplied power to a predetermined target power (Pt), and
after detection of the reception of the alternating power by the power receiving sensor, the control circuit works to increase the power supply ratio to the target ratio or less.

### SECOND ASPECT

The power receiving device as set forth in the above-described first aspect, further comprising a current sensor (160), a power supply controller (151a), and a limiter (151b), the current sensor measuring a current value of the direct-current power. The power supply controller determines the power supply ratio using the current value. The limiter limits the power supply ratio determined by the power supply controller. The limiter functions to relax limit of the power supply ratio at a speed slower than that at which the power supply controller determines the power supply ratio.

### THIRD ASPECT

The power receiving device as set forth in the above-described second aspect, wherein the switch functions at least one of rectifying devices of the rectifier circuit.

### FOURTH ASPECT

The power receiving device as set forth in the above-described third aspect, wherein the switch includes a plurality of switches serving as all of rectifying devices constituting the rectifier circuit, and further comprises:
parallel diodes (Di) each of which is connected in parallel with a respective one of the switches and oriented in a direction opposite to a forward direction of the switch.

The rectifier circuit includes leg circuits (121, 122) in each of which two of the switches are connected in series, the leg circuits connecting a positive line (Lp) and a negative line (Ln) for the DC power. The two switches of each of the leg circuits include a first switch (SwH) connecting with the positive line and a second switch (SwL) connecting with the negative line.

The control circuit configured to:
in a first time period including a start of the power reception detected by the power receiving sensor, selectively execute the short-circuit mode and the power supply mode by using the second switches and the parallel diodes connected in parallel with the first switches, and
in a second time period which is after the first time period, when the power receiving sensor detects a predetermined reference current, selectively execute the short-circuit mode and the power supply mode by using the second switches and the first switches.

## Claims

1. A power receiving device (100, 100x) configured to receive alternating power in a wireless manner using a magnetic field, the power receiving device comprising:
a resonance circuit (110) including a power receiving coil (111) configured to receive the alternating power, the resonance circuit having a magnitude of the alternating power that differs depending on a state of resonance of the resonance circuit or coupling of the power receiving coil;
a rectifier circuit (120, 120x) that is configured to convert the alternating power into direct-current power;
a load device (130) that is configured to consume the direct-current power;
a power control circuit (140, 140x) including a switch (Sw) configured to short-circuit input terminals (P1, P2) of the rectifier circuit, the power control circuit being configured to adjust, between the power receiving coil and the load device, supplied power (Pa) that is a portion of the alternating power to be supplied to the load device;
a power receiving sensor (160) that is configured to detect reception of the alternating power or the direct-current power; and
a control circuit (150, 150x) configured to control an operation of the power receiving device, wherein
the control circuit is configured to execute a short-circuit mode and a power supply mode for each half cycle of a cycle (Ca) of the alternating power, the short-circuit mode being a mode in which the input terminals are short-circuited for a predetermined short-circuit mode period, the power supply mode being a mode in which the input terminals are opened for a power supply mode period excluding the short-circuit mode period in the half cycle,
the control circuit, before start of reception of the alternating power detected by the power receiving sensor, works to set a power supply ratio (D), which is a ratio of the power supply mode period in the half cycle, to be smaller than a minimum target ratio (Dm), the minimum target ratio (Dm) being a minimum value of a target ratio (Dt) that is determined as a function of a state of the coupling capable of setting the supplied power to a predetermined target power (Pt), and
after detection of the reception of the alternating power by the power receiving sensor, the control circuit works to increase the power supply ratio to the target ratio or less.

2. The power receiving device as set forth in claim 1, further comprising a current sensor (160), a power supply controller (151a), and a limiter (151b), the current sensor measuring a current value of the direct-current power, the power supply controller determining the power supply ratio using the current value, the limiter limiting the power supply ratio determined by the power supply controller, and wherein
the limiter functions to relax limit of the power supply ratio at a speed slower than that at which the power supply controller determines the power supply ratio.

3. The power receiving device as set forth in claim 2, wherein the switch functions at least one of rectifying devices of the rectifier circuit.

4. The power receiving device as set forth in claim 1, wherein the switch includes a plurality of switches serving as all of rectifying devices constituting the rectifier circuit, further comprising:
parallel diodes (Di) each of which is connected in parallel with a respective one of the switches and oriented in a direction opposite to a forward direction of the switch, wherein
the rectifier circuit includes leg circuits (121, 122) in each of which two of the switches are connected in series, the leg circuits connecting a positive line (Lp) and a negative line (Ln) for the DC power,
the two switches of each of the leg circuits include a first switch (SwH) connecting with the positive line and a second switch (SwL) connecting with the negative line, and
the control circuit configured to:
in a first time period including a start of the power reception detected by the power receiving sensor, selectively execute the short-circuit mode and the power supply mode by using the second switches and the parallel diodes connected in parallel with the first switches, and
in a second time period which is after the first time period, when the power receiving sensor detects a predetermined reference current, selectively execute the short-circuit mode and the power supply mode by using the second switches and the first switches.
